# EUROPEAN PATENT APPLICATION

(11) **EP 3 471 234 A1**
(43) Date of publication of application: **17.04.2019**
(21) Application number: 18196361.2
(22) Date of filing: 24.09.2018
(51) Int. Cl.: H02J 7/00, H02J 7/04

(54) **METHOD, APPARATUS, AND DEVICE FOR CHARGING A BATTERY AND STORAGE MEDIUM**

(30) Priority: 27.09.2017 CN 201710891917
(71) Applicant: Contemporary Amperex Technology Co., Limited, Jiaocheng District Ningde City, Fujian 352100 (CN)
(72) Inventor: ZOU, Qifan, Ningde City, Fujian 352100 (CN); LUO, Fuping, Ningde City, Fujian 352100 (CN); DU, Xinxin, Ningde City, Fujian 352100 (CN); WANG, Shengwei, Ningde City, Fujian 352100 (CN); XU, Wenzhu, Ningde City, Fujian 352100 (CN)
(74) Representative: Boult Wade Tennant LLP

(57) **Abstract**

The present disclosure provides a method, apparatus, and device for charging a battery, and storage medium. The method for charging a battery includes acquiring a battery temperature of the battery (S110); determining a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges (S120); charging the battery with Iⱼ in the j^{th} charging stage (S130); acquiring a SOC of the battery at the current time during the charging of the battery (S140); if the SOC at the current time is less than Sⱼ, continuing to charge the battery with Iⱼ (S150); if the SOC at the current time is not less than Sⱼ and j<N, charging the battery with Iⱼ₊₁ (S150); if the SOC at the current time is not less than Sⱼ and j= N, stopping charging the battery (S150). According to the method provided by the embodiments of the present disclosure, the charging efficiency and the charging amount of the battery can be effectively improved, the service life of the battery can be prolonged, and an allowable charging temperature range of the battery can be expanded.

## Description

### FIELD

The present disclosure relates to the technical field of batteries, and in particular, to a method, apparatus, and device for charging a battery, and storage medium.

### BACKGROUND

At present, with the gradual consumption of non-renewable energy such as oil and with the urgent need for environment protection, the development of new energy industry has drawn great attention. One of the key and core technologies of the new energy industry is the battery. New energy vehicles which use rechargeable batteries as power source have achieved rapid development in recent years, the proportion of new energy vehicles in the vehicles all over the world is gradually expanded, and they are widely used in large and medium-sized cities, which is an important part of developing the electric vehicle industry and realizing advanced manufacturing in our country.

Most of the current electric vehicles use charging piles to charge a battery at a constant current. When adopting the charging method, since under different states of charge (SOCs), a rechargeable battery can actually bear different charging currents, resulting in that the charging efficiency of constant current charging is relatively low. In addition, if the rechargeable battery is charged under too high or too low a temperature, the method of constant current charging may have a negative effect on the service life of the battery.

### SUMMARY

According to embodiments of the present disclosure, there is provided a method, apparatus, and device for charging a battery, and storage medium, which may improve the efficiency of charging the battery, and extend the service life of the battery.

According to an aspect of the embodiments of the present disclosure, there is provided a method for charging a battery. The method for charging a battery includes acquiring a battery temperature of the battery; determining a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges, wherein Sₙ>Sₙ₋₁, 1<n≤N, and N is the total number of charging stages; charging the battery with Iⱼ in the j^{th} charging stage, wherein 1≤j≤N; acquiring a SOC of the battery at the current time during the charging of the battery; if the SOC at the current time is less than Sⱼ, continuing to charge the battery with Iⱼ; if the SOC at the current time is not less than Sⱼ and j<N, charging the battery with Iⱼ₊₁; if the SOC at the current time is not less than Sⱼ and j= N, stopping charging the battery.

According to another aspect of the embodiments of the present disclosure, there is provided an apparatus for charging a battery. The apparatus for charging a battery includes a battery temperature acquiring unit configured to acquire a battery temperature of the battery; a charging current determining unit configured to determine a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges, wherein Sₙ>Sₙ₋₁, 1<n≤N, and N is the total number of charging stages; a charging unit configured to charge the battery with Iⱼ in the j^{th} charging stage, wherein 1≤j≤N; a current SOC acquiring unit configured to acquire a SOC of the battery at the current time during the charging of the battery; wherein the charging unit is further configured to: if the SOC at the current time is less than Sⱼ, continue to charge the battery with Iⱼ; if the SOC at the current time is not less than Sⱼ and j <N, charge the battery with Iⱼ₊₁; if the SOC at the current time is not less than Sⱼ and j= N, stop charging the battery.

According to yet another aspect of the embodiments of the present disclosure, there is provided a device for charging a battery. The device for charging a battery includes a memory and a processor. The memory is configured to store executable program codes. The processor is configured to read the executable program codes stored in the memory to perform the method for charging a battery according the embodiments of the present disclosure.

According to a further aspect of the embodiments of the present disclosure, there is provided a computer-readable storage medium having computer instructions stored thereon which, when executed on a computer, cause the computer to perform the method for charging a battery according the embodiments of the present disclosure.

According to a method, apparatus, and device for charging a battery, and storage medium in the embodiments of the present disclosure, when the battery is charged, a charging current value Iₙ for the n^{th} charging stage of the battery is first determined according to a battery temperature and the mapping relationship between the S and the I for different temperature ranges. During the charging, a SOC of the battery at the current time during the charging of the battery is acquired. Then a charging state of the battery is determined by comparing the SOC at the current time with the charging cut-off SOC for the corresponding charging stage. By adopting a multi-stages and step-by-step charging method which is associated with the battery temperature and based on the SOC, the method for charging a battery in the embodiments of the present disclosure not only can effectively improve the charging efficiency and the charging amount of the battery, but also can effectively prolong the service life of the battery, and can expand an allowable charging temperature range of a rechargeable battery.

### BRIEF DESCRIPTION OF THE DRAWINGS

Other features, objects, and advantages of the present disclosure will become more apparent by reading the following detailed descriptions of non-limiting embodiments with reference to the accompanying drawings, in which the same or similar reference signs denote the same or similar features.
Fig. 1 is a schematic flow chart of a method for charging a battery according to an embodiment of the present disclosure;
Fig. 2 is a schematic diagram of a mapping relationship between a set S and I for a temperature range according to an embodiment of the present disclosure;
Fig. 3 is a schematic diagram of a comparison of curves of a battery charging voltage versus a SOC during the charging of the battery in a specific embodiment 1 and a specific comparative embodiment 1 of the present disclosure;
Fig. 4 is a schematic diagram of a comparison of curves of a battery charging current versus a SOC during the charging of the battery in a specific embodiment 1 and a specific comparative embodiment 2 of the present disclosure;
Fig. 5 is a schematic diagram of a comparison of curves of a battery capacity retention rate versus a battery cycle number during the charging of the battery in a specific embodiment 1 and a specific comparative embodiment 2 of the present disclosure;
Fig. 6 is a schematic structural diagram of an apparatus for charging a battery according to an embodiment of the present disclosure;
Fig. 7 is a schematic structural diagram of an apparatus for charging a battery according to another embodiment of the present disclosure;
Fig. 8 is a structural diagram of an exemplary hardware architecture of a computing device that can implement the method and apparatus for charging a battery according to an embodiment of the present disclosure.

### DETAILED DESCRIPTION

The features and exemplary embodiments of the various aspects of the present disclosure will be described in detail below. In the following detailed description, numerous specific details are set forth in order to provide a thorough understanding of the present disclosure. It will be apparent, however, to those skilled in the art that the present disclosure may be practiced without some of these specific details. The following description of embodiments is only provided by illustrating examples for a better understanding of the present disclosure. The present disclosure is by no means limited to any of the specific configurations and algorithms set forth below, but covers any alterations, substitutions and improvements of elements, components and algorithms without departing from the present disclosure. In the drawings and the following description, at least a part of well-known structures and techniques are not shown in order to avoid unnecessarily obscuring the present disclosure.

For a better understanding of the present disclosure, a method, apparatus, and device for charging a battery according to the embodiments of the present disclosure will be described in detail below with reference to the drawings. It should be noted that these embodiments are not intended to limit the scope of the present disclosure.

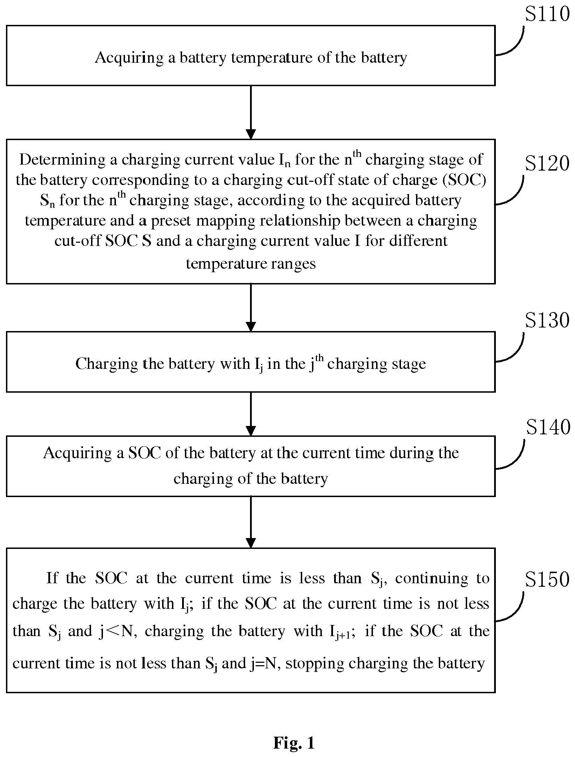

Fig. 1 illustrates a schematic flow chart of a method for charging a battery according to an embodiment of the present disclosure. As shown in Fig. 1, the method for charging a battery according to the present embodiment may include the following steps.

In step S110, a battery temperature of the battery may be acquired.

In step S120, a charging current value Iₙ for the n^{th} charging stage of the battery corresponding to a charging cut-off state of charge (SOC) Sₙ for the n^{th} charging stage may be determined according to the acquired battery temperature and a preset mapping relationship between a charging cut-off SOC S and a charging current value I for different temperature ranges.

In the embodiments of the present disclosure, the battery temperature is one of the most important parameters for charging the rechargeable battery. Under different battery temperatures, the optimal charging current required by the battery is not the same. Thus, using the method of constant current charging under too high or too low a temperature may have a negative effect on battery charging performance and battery life. Therefore, in order to improve the charging efficiency and extend battery life, this parameter, namely the battery temperature, needs to be considered.

In the embodiments of the present disclosure, before charging the battery, first, the battery temperature may be acquired, and then a charging current value Iₙ for the n^{th} charging stage of the battery corresponding to Sₙ may be determined according to the acquired battery temperature and a preset mapping relationship between the S and the I for different temperature ranges, wherein Sₙ>Sₙ₋₁, 1<n≤N, and N is the total number of charging stages

In some embodiments, the battery temperature may be acquired by arranging a temperature sensor on the battery.

In a preferred embodiment of the present disclosure, Iₙ<Iₙ₋₁, that is to say, as the charging stage increases, the charging cut-off SOC is increased and the charging current value is decremented.

At present, during an actual process of charging a battery, as the charging time increases, the battery power and battery voltage are also increasing, and thus the bearing capacity of the battery for the charging current value will decline. Using decreasing charging current value as the charging stage increases will make the charging effect of the battery better and is more conducive to increase the battery power

In the embodiments of the present disclosure, the mapping relationship described above is a mapping relationship between N charging cut-off SOCs for N charging stages and N charging current values for N charging stages for different temperature ranges, that is, the foregoing S may include N charging cut-off SOCs, I for each temperature range may include N charging current values, and the mapping relationship is a mapping relationship between a group of charging cut-off SOCs and a plurality of groups of charging current values. Each group of charging current values may correspond to a temperature range. S may be preset, and for different temperature ranges, I corresponding to S are different. After the battery temperature is acquired, a charging current value of the battery at the battery temperature may be determined according to the preset mapping relationship.

For example, in an embodiment of the present disclosure, it is assumed that the charging stages of the battery may be divided into three charging stages, that is, N=3. Table 1 shows a mapping relationship between three charging cut-off SOCs for three charging stages and three charging current values for three charging stages for different temperature ranges.

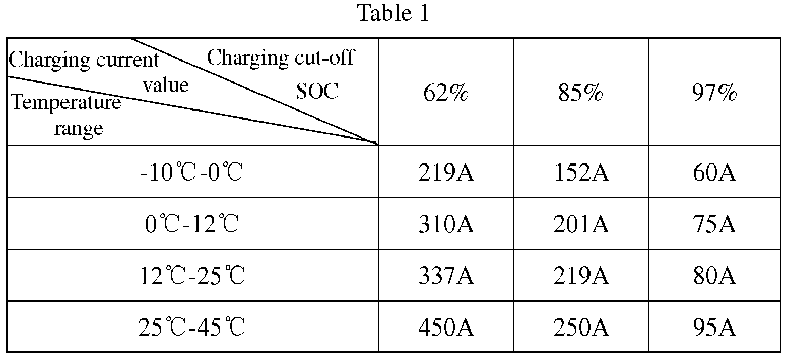

In Table 1, the column of the temperature range indicates a plurality of different temperature ranges. Specifically, four temperature ranges are illustrated, that is, -10°C-0°C, 0°C -12°C, 12°C -25 °C and 25 °C -45 °C.

The row of the charging cut-off SOC shows three preset charging cut-off SOCs of 62%, 85% and 97% for the three charging stages, respectively, and the charging current values for the three charging stages for the temperature range of -10°C-0°C corresponding to the three charging cut-off SOCs of 62% (charging cut-off SOC for the first charging stage), 85% (charging cut-off SOC for the second charging stage), and 97% (charging cut-off SOC for the third charging stage) are 219A (charging current value for the first charging stage), 152A (charging current value for the second charging stage), 60A (charging current value for the third charging stage) respectively. The charging current values for the three charging stages for the temperature range of 0°C-12°C corresponding to the three charging cut-off SOCs of 62%, 85% and 97% are 310A, 201A and 75A respectively.

In the embodiments of the present disclosure, determining a charging current value Iₙ for the n^{th} charging stage of the battery corresponding to Sₙ according to the acquired battery temperature and a preset mapping relationship between the S and the I for different temperature ranges may include: determining a temperature range in which the battery temperature is located; determining a charging current value for the n^{th} charging stage for the temperature range in which the battery temperature is located as the Iₙ, according to the mapping relationship

In particular, a temperature range in which the battery temperature is located may be determined first, and then charging current values (N charging current values for N stages) for the temperature range in which the battery temperature is located may be determined according to the above mapping relationship. A charging current value for the n^{th} charging stage in the determined charging current values is namely the charging current value Iₙ for the n^{th} charging stage of the battery at the above battery temperature.

For example, for the mapping relationship shown in Table 1 above, assuming that the battery temperature is 15°C, then the temperature range in which 15°C is located may be 12°C -25 °C. Therefore, the charging current values for the three charging stages of the battery at 15°C are respectively 337A, 219A and 80A, that is, I₁ is 337A, I₂ is 219A, and I₃ is 80A.

In practical applications, if the battery temperature is the common end value of two temperature ranges, a charging current value for one of the temperature ranges may be randomly selected as the charging current value of the battery at the battery temperature. The charging current value of the battery at the battery temperature may also be determined according to a preset condition. For example, a charging current value for a temperature range with higher temperatures in the two temperature ranges may be determined as the charging current value for the n^{th} charging stage of the battery. For example, for the mapping relationship in Table 1 above, if the battery temperature is 25 °C, then 450A, 250A and 95A may be determined as the charge current values for three charging stages of the battery at 25°C.

In the embodiments of the present disclosure, before determining the charging current value Iₙ for the n^{th} charging stage of the battery corresponding to Sₙ, the method may further include setting the mapping relationship between the S and the I for different temperature ranges.

In an embodiment of the present disclosure, setting the mapping relationship between the S and the I for different temperature ranges may further include: setting the S; determining a correspondence relationship between the n^{th} interval of charging cut-off SOCs and charging current values corresponding to the n^{th} interval for the different temperature ranges, wherein a minimum SOC value for the n^{th} interval is Sₙ₋₁, a maximum SOC value for the n^{th} interval is Sₙ, and a minimum SOC value for the 1^{st} interval is 0; establishing a mapping relationship between the Sₙ and the charging current values corresponding to the n^{th} interval for the different temperature ranges, according to the correspondence relationship.

In this embodiment, first, N charging cut-off SOC S for N charging stages may be set according to a selected battery system, and N intervals for the charging cut-off SOCs may be divided according to the set charging cut-off SOC S. A minimum SOC value for the first interval is 0, and a maximum SOC value for the first interval is S₁; a minimum SOC value for the second interval is S₁, and a maximum SOC value for the second interval is S₂. Similarly, a minimum SOC value for the n^{th} interval is Sₙ₋₁, a maximum SOC value for the n^{th} interval is Sₙ, a minimum SOC value for the N^{th} interval is S_{N-1}, a maximum SOC value for the N^{th} interval is S_{N}.

After dividing the n^{th} interval for the charging cut-off SOCs, charging current values corresponding to the n^{th} interval for different temperature ranges may be determined, to obtain a correspondence relationship between the n^{th} interval and the charging current values corresponding to the n^{th} interval for different temperature ranges. According to the correspondence relationship, a mapping relationship between the Sₙ and the charging current values corresponding to the n^{th} interval for different temperature ranges may be established.

Determining the charging current values corresponding to the n^{th} interval for different temperature ranges may be done through experimental values and/or empirical values. For example, optimal charging current values corresponding to the n^{th} interval for different temperatures may be obtained through experiments, and the optimal charging current values for different temperature ranges obtained by the experiments may be determined as the charging current values corresponding to the n^{th} interval for different temperature ranges.

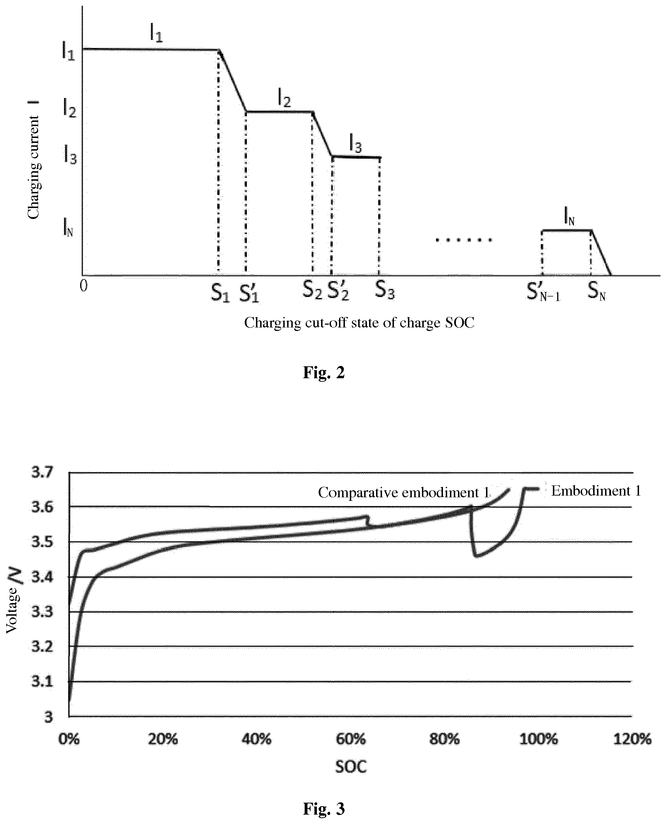

Fig. 2 illustrates a schematic diagram of setting a mapping relationship between N charging cut-off SOCs for N charging stages and N charging current values for N charging stages for a temperature range of T₁-T₂ (namely a mapping relationship between S and I for a temperature range of T₁-T₂) in the method for charging a battery according to embodiments of the present disclosure. In Fig. 2, a correspondence relationship between N charging cut-off SOC intervals and the charging current values corresponding to the respective charging cut-off SOC intervals is exemplarily shown.

As shown in Fig. 2, I₁, I₂, ..., I_{N} in the figure respectively represent a charging current value for the first charging stage, a charging current value for the second charging stage, ..., and a charging current value for the N^{th} charging stage.

S₁, S₂, ..., S_{N} respectively represent a charging cut-off SOC for the first charging stage, a charging cut-off SOC for the second charging stage, ..., and a charging cut-off SOC for the N^{th} charging stage. N charging cut-off SOC intervals of 0-S₁ (the first interval), S₁-S₂ (the second interval), S₂-S₃ (the third interval), ..., Sₙ₋₁-Sₙ (the n^{th} interval), ..., S_{N-1}-S_{N} (the N^{th} interval) respectively correspond to the charging current values I₁, I₂, ..., Iₙ, ..., I_{N}, that is, a mapping relationship between the n^{th} interval and a charging current value corresponding to the n^{th} interval may be determined. A charging current value corresponding to the n^{th} interval is Iₙ.

A mapping relationship between Sₙ and Iₙ for the temperature range of T₁-T₂ may be determined according to the determined correspondence relationship between the n^{th} interval of charging cut-off SOCs and the charging current value corresponding to the n^{th} interval for the temperature range of T₁-T₂, that is, a mapping relationship between a maximum SOC value Sₙ for the n^{th} interval and the charging current value Iₙ corresponding to the n^{th} interval for the temperature range of T₁-T₂ may be established. In this way, a mapping relationship between S and I for the temperature range of T₁-T₂ may be obtained. Repeating the above method, a mapping relationship between S and I for different temperature ranges may be obtained.

It should be noted that during an actual process of charging a battery, when entering the (j+1)^{th} charging stage from the j^{th} charging stage, the charging current Iⱼ will not momentarily change to Iⱼ₊₁, and instead, will gradually change to a charging current value for the next charging stage. During the current change, as the charging time increases, the SOC of the battery also increases during the change. As shown in Fig. 2, during the change of the charging current from Iₙ to Iₙ₊₁, the SOC of the battery will increase to S'ₙ from Sₙ.

In step S130, in the j^{th} charging stage, the battery may be charged with Iⱼ.

After the charging current value Iₙ for the n^{th} charging stage of the battery is determined according to the battery temperature, the battery may be charged in multiple stages. In the j^{th} charging stage, the battery may be charged with Iⱼ, wherein 1≤j≤N.

In step S140, a SOC of the battery at the current time during the charging of the battery may be acquired.

In step S150, if the SOC at the current time is less than Sⱼ, then the battery may continue to be charged with Iⱼ; if the SOC at the current time is not less than Sⱼ and j <N, then the battery may be charged with Iⱼ₊₁; and if the SOC at the current time is not less than Sⱼ and j=N, then the charging of the battery may be stopped.

Under different states of charge (SOCs), a rechargeable battery can actually bear different charging currents, therefore during the charging of the battery, SOC is also a charging parameter that needs to be considered. In the embodiments of the present disclosure, during the charging of the battery, a SOC of the battery at the current time during the charging of the battery may be acquired, and then a current charging state of the battery may be determined by comparing the SOC at the current time with the charging cut-off SOC for a charging stage in which the battery is located. Specifically, in the embodiments of the present disclosure, during the charging of the battery with Iⱼ in the j^{th} charging stage, a current SOC of the battery may be acquired, and if the SOC at the current time is less than a charging cut-off SOC Sⱼ for the j^{th} charging stage, then the battery may continue to be charged with Iⱼ; if the SOC at the current time is not less than Sj and j <N (the j^{th} charging stage at this time is not the last charging stage), then the battery may be charged with Iⱼ₊₁; and if the SOC at the current time is not less than Sⱼ and j=N (the j^{th} charging stage at this time is the last charging stage), then the charging of the battery may be stopped.

It should be noted that, in the embodiments of the present disclosure, the current time of the battery during the charging of the battery may be set according to actual needs, that is, acquiring a SOC of the battery at which one or more specified moments during the charging process may be set as required. For example, the acquisition of SOC during the process of charging the battery may be performed at a preset time interval (for example, 3 minutes). At this time, a SOC value at the current time during the charging of the battery may be obtained every 3 minutes. For another example, a SOC value of the battery at the current time may also be acquired in real time during the charging process, that is, a SOC of the battery during the charging of the battery may be monitored in real time.

In the embodiments of the present disclosure, charging the battery with Iⱼ₊₁ may include: controlling Iⱼ to change to Iⱼ₊₁ at a predetermined rate, and charging the battery with Iⱼ₊₁.

From the foregoing description, during an actual process of charging the battery, when entering the (j+1)^{th} charging stage from the j^{th} charging stage, the charging current Iⱼ will not momentarily change to Iⱼ₊₁, and instead, will gradually decrease to reach a charging current value for the next charging stage. Accordingly, when charging the battery is stopped, the charging current value will gradually decrease from I_{N} to 0. In the embodiments shown in Fig. 2, Iₙ<Iₙ₋₁, that is, a charging current value decreases as the charging stage increases. As entering the second charging stage from the first charging stage, the charging current value I₁ will gradually decrease to the charging current value I₂, and during the process of gradually decreasing, the battery of SOC will also increase.

In a specific embodiment of the present disclosure, charging the battery with Iⱼ may include: acquiring a SOC before charging the battery; determining a charging cut-off SOC interval in which the SOC before charging the battery is located; determining a charging current value corresponding to the charging cut-off SOC interval in which the SOC before charging the battery is located according to the battery temperature and the above correspondence relationship; setting the determined charging current value as Iⱼ; and charging the battery with Iⱼ.

In this embodiment, before charging the battery, first, an initial charge current value of the battery may be determined according to the SOC before charging the battery, that is, after determining the charge current value Iₙ for the n^{th} charging stage of the battery at the battery temperature, an initial charging current value in Iₙ for charging the battery may further be determined. Specifically, according to the correspondence relationship, which is determined when establishing the above mapping relationship, between the n^{th} interval of charging cut-off SOCs and a charging current value corresponding to the n^{th} interval for a temperature range in which the above battery temperature is located, a charging current value corresponding to a charging cut-off SOC interval in which the SOC before charging the battery is located may be determined as Iⱼ, and the charging of the battery starts with Iⱼ. For example, in one specific embodiment, assuming that Iₙ is Iₙ shown in Fig. 2, the SOC before charging the battery is located in the second interval of charging cut-off SOCs, namely an interval of charging cut-off SOCs in which a minimum SOC value is S₁, and a maximum SOC value is S₂. A charging current value corresponding to the second interval is I₂, and then the battery starts to be charged with I₂ at this time.

It should be noted that a specific implementation of acquiring a SOC of the battery (for example, acquiring a SOC before charging the battery and acquiring a SOC at the current time during the charging of the battery) is the prior art and will not be described in detail herein.

The battery described in the embodiments of the present disclosure may be a battery in which both a positive electrode and a negative electrode are capable of releasing and receiving an energy-carrying particle, including but not limited to a lithium iron phosphate (LFP) power storage unit. In terms of scale, the battery described in the embodiments of the present disclosure may be a battery cell, or may be a battery module or a battery pack, which will not be limited herein.

For rechargeable batteries of different systems, battery charge and discharge characteristics are different. For a battery of LFP system, since the battery voltage platform is relatively flat, the voltage cannot be accurately monitored, but a SOC of the battery can be calculated more accurately, therefore using a SOC may characterize a battery charging depth well and adjust the battery charging rate. Therefore, the method for charging a battery provided by the embodiments of the present disclosure is particularly suitable for a battery of the LFP system, that is, the LFP power storage unit described above.

The method for charging a battery provided by the embodiments of the present disclosure adopts a multi-stage and step-by-step charging method which is associated with the battery temperature and is based on the SOC of the battery. During the charging process, a charging state of the battery may be adjusted in real time according to a SOC of the battery at the current time and the charging cut-off SOCs for respective charging stages. By adopting the method for charging a battery according to the embodiments of the present disclosure, not only the charging efficiency and the charging amount may be improved, but also the service life of the battery may be prolonged, and an allowable charging temperature range of a rechargeable battery may be expanded.

The method for charging a battery in the embodiments of the present disclosure and the improvements of the method for charging a battery described above over an existing method for charging a battery will be described in detail below with reference to a specific embodiment 1, a specific comparative embodiment 1 and a specific comparative embodiment 2.

The specific embodiment 1 is as follows.

In this specific embodiment, the charging stages of the battery may be set to three, three charging cut-off SOCs for the three charging stages may be set as 62%, 85% and 97% respectively, and a mapping relationship between the set three charging cut-off SOCs for the three charging stages and three charging current values for the three charging stages for different temperature ranges is shown in Table 1 above.

When the battery needs to be charged, the battery temperature acquired in this embodiment is 25°C. According to the mapping relationship shown in Table 1, it can be seen that 25°C is a common end value of 12°C-25°C and 25°C-45°C. At this time, a set of larger charging current values may be determined as charging current values of the battery at 25°C, that is, charging current values for three charging stages of the battery at 25°C may be 450A, 250A and 95A respectively, which are denoted as {450A, 250A, 95A} in this embodiment for convenience of description. Charging cut-off SOCs for the three charging stages are denoted as {62%, 85%, 97%}, that is, the values in {450A, 250A, 95A} and the values in {62%, 85%, 97%} are in one-to-one correspondence.

In this embodiment, the SOC before charging the battery may be 55%. Since 55% is located in an interval of charging cut-off SOCs of 0%∼62%, namely the first interval, the charging current value 450A corresponding to the interval of 0%∼62% may be an initial charging current value for starting to charge the battery.

During the charging of the battery, a SOC of the battery at the current time may be collected in real time, and the SOC Sₜ at the current time t may be compared with S₁, namely 62%. If Sₜ<62%, the battery may continue to be charged with 450A. During the charging process, the SOC of the battery at the current time may be continuously acquired, and the SOC at the current time may be continuously compared with 62% until the SOC at the current time is equal to or greater than 62%, and then the battery is charged with 250A. During the charging process, the SOC at the current time may be acquired and compared with the S₂, namely 85% until the SOC at the current time is equal to or greater than S₂, and then the battery may continue to be charged with a current of 95A, until the SOC at the current time is equal to or greater than 97%, charging the battery may be stopped.

Of course, during an actual charging process, a user may also control the end of the charging process as needed. For example, if the battery is disconnected from the charging power supply, the charging process may be ended.

The specific comparative embodiment 1 is as follows.

In the specific comparative embodiment 1, a charging cut-off voltage of the battery may be set to 3.65V, the battery may be charged and discharged at a battery temperature of 25°C, and the battery may be charged with a constant current 300A until the battery voltage reaches 3.65V.

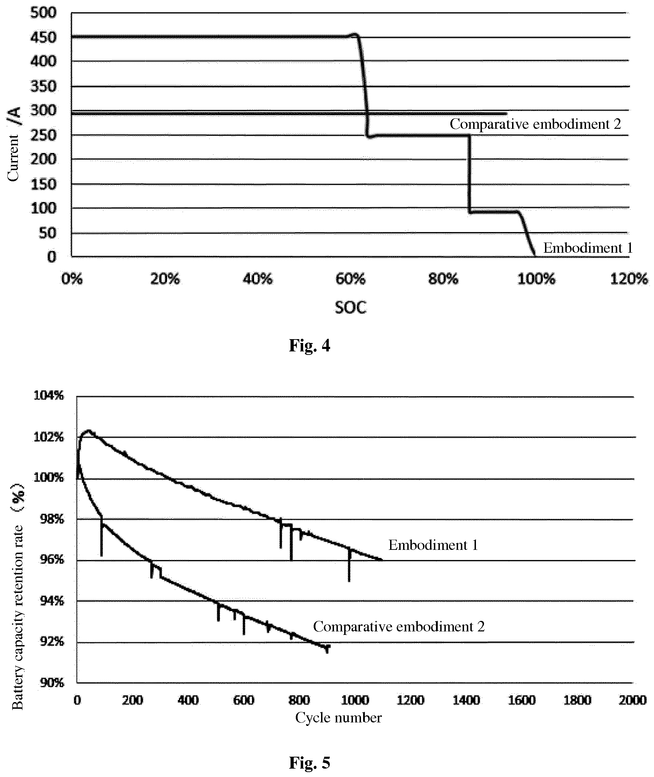

The method for charging a battery according to the specific embodiment 1 and the specific comparative embodiment 1 of the present disclosure will be described below with reference to Fig. 4.

Fig. 3 is a schematic diagram of a comparison of charging curves of a charging voltage versus a charging SOC of the specific embodiment 1 and the specific comparative embodiment 1 in the methods of charging a battery of the present disclosure. It can be seen from Fig. 3 that, although charging of the specific embodiment 1 and the specific comparative embodiment 1 both do not exceed the charging cut-off voltage, namely the upper limit voltage of 3.65 V, the battery in the specific embodiment 1 can have a higher state of charge SOC as compared to the specific comparative embodiment 1. It can be seen that the method for charging a battery in the specific embodiment 1 of the present disclosure may charge more power into the battery.

The specific comparative embodiment 2 is as follows.

In the specific comparative embodiment 2, a charging cut-off state of charge of the battery may be set to 97%, the battery may be charged and discharged at a battery temperature of 25°C, and the battery may be charged with a constant current 300A until the state of charge of the battery reaches 97%.

The method for charging a battery according to the specific embodiment 1 and the specific comparative embodiment 2 of the present disclosure will be described below with reference to Fig. 4 and Fig. 5.

Fig. 4 is a schematic diagram of a comparison of charging curves of a charging current versus a charging SOC of the specific embodiment 1 and the specific comparative embodiment 2 in the methods of charging a battery of the present disclosure. It can be seen from Fig. 4 that, the charging current of the specific comparative embodiment 2, in the latter period, is terminated due to a current upper limit allowed by a charging state of charge SOC. However, in the specific embodiment 1, multi-stages charging is adopted, wherein, as the charging progresses, the charge current in the latter period becomes smaller. As compared with the charging method in specific comparative embodiment 2, the charging method in specific embodiment 1 may enable the charging to be continued to a higher state of charge SOC, and thus the charging amount of the battery may be higher.

Fig. 5 is a schematic diagram of curves of a battery capacity retention rate versus a battery cycle number (battery charge and discharge times) of the specific embodiment 1 and the specific comparative embodiment 2 in the methods of charging a battery of the present disclosure. As can be seen from Fig. 5, as compared with the charging method in specific comparative embodiment 2, the battery capacity retention rate according to the charging method in specific embodiment 1 is remarkably improved with the increase of the number of cycles. It can be seen that the specific embodiment 1 can effectively improve the service life of the battery.

In summary, as compared with the method for charging a battery in the comparative embodiments, the method for charging a battery in the specific embodiments of the present disclosure can improve the charging amount of the battery and improve the service life of the battery.

The apparatus and device for charging a battery according to the embodiments of the present disclosure are described in detail below with reference to the accompanying drawings.

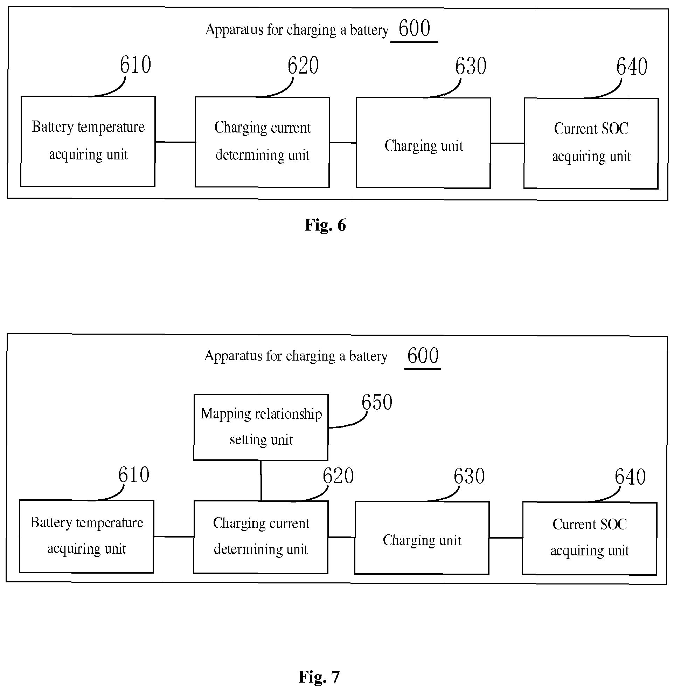

Fig. 6 illustrates a schematic structural diagram of an apparatus for charging a battery according to an embodiment of the present disclosure. As shown in Fig. 6, the apparatus 600 for charging a battery may include a battery temperature acquiring unit 610, a charging current determining unit 620, a charging unit 630 and a current SOC acquiring unit 640.

The battery temperature acquiring unit 610 may be configured to acquire a battery temperature of the battery.

The charging current determining unit 620 may be configured to determine a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges, wherein Sₙ>Sₙ₋₁, 1<n≤N, and N is the total number of charging stages.

The charging unit 630 may be configured to charge the battery with Iⱼ in the j^{th} charging stage, wherein 1≤j≤N.

The current SOC acquiring unit 640 may be configured to acquire a SOC of the battery at the current time during the charging of the battery.

The charging unit 630 may be further configured to: if the SOC at the current time is less than Sⱼ, continue to charge the battery with Iⱼ; if the SOC at the current time is not less than Sⱼ and j <N, charge the battery with Iⱼ₊₁; if the SOC at the current time is not less than Sⱼ and j=N, stop charging the battery.

According to the apparatus 600 for charging a battery provided by the embodiments of the present disclosure, when the battery is charged, first, a battery temperature may be acquired by the battery temperature acquiring unit 610, and a current Iₙ corresponding to Sₙ may be determined by the charging current determining unit 620 according to the battery temperature and a preset mapping relationship between S and I for different temperature ranges. During the charging of the battery by the charging unit 630, a SOC of the battery at the current time during the charging of the battery may be acquired by the current SOC acquiring unit 640. The charging unit 630 may update a charging state of the battery by comparing the SOC at the current time with a charging cut-off SOC corresponding to a current charging phase. By adopting a multi-stages and step-by-step charging method which is associated with the battery temperature and based on the SOC, the apparatus 600 for charging a battery according to the embodiments of the present disclosure not only can effectively improve the charging amount and the charging efficiency of the battery, but also can effectively prolong the service life of the battery, and can expand an allowable charging temperature range of a rechargeable battery.

The apparatus 600 for charging a battery according to the embodiments of the present disclosure may correspond to an execution body in the method for charging a battery according to the embodiments of the present disclosure, and functions of the respective units in the apparatus 600 for charging a battery are respectively implemented in order to implement the respective processes of the method in Fig. 1, which will not be repeated herein for conciseness.

In the embodiments of the present disclosure, the apparatus for charging a battery described above may further include a mapping relationship setting unit 650, as shown in Fig. 7.

The mapping relationship setting unit 650 may be configured to set the mapping relationship between the S and the I for different temperature ranges.

In an embodiment of the present disclosure, the mapping relationship setting unit 650 may be further configured to: set the S; determine a correspondence relationship between the n^{th} interval of charging cut-off SOCs and charging current values corresponding to the n^{th} interval for the different temperature ranges, wherein a minimum SOC value for the n^{th} interval is Sₙ₋₁, a maximum SOC value for the n^{th} interval is Sₙ, and a minimum SOC value for the 1^{st} interval is 0; establish a mapping relationship between the Sₙ and the charging current values corresponding to the n^{th} interval for the different temperature ranges, according to the correspondence relationship.

For a specific function implementation of the mapping relationship setting unit 650 of the apparatus for charging a battery provided in the embodiments of the present disclosure, reference may be made to the specific implementation steps of the method for charging a battery provided in the foregoing embodiments of the present disclosure, which will not be repeated herein.

In an embodiment of the present disclosure, the charging unit 630 may be further configured to acquire a SOC before charging the battery; determine a charging cut-off SOC interval in which the SOC before charging the battery is located; determine a charging current value corresponding to the charging cut-off SOC interval according to the battery temperature and the correspondence relationship; set the determined charging current value as Iⱼ; and charge the battery with Iⱼ.

In this embodiment, when the battery is charged, the charging unit 630 may determine an initial charging current value of the battery according to the SOC before charging the battery, and may start to charge the battery with the determined initial charging current value. For a specific function implementation of the charging unit 630 in this embodiment, reference may be made to the corresponding description in the method for charging a battery in the foregoing embodiments of the present disclosure, which will not be repeated herein.

In an embodiment of the present disclosure, the charging current determining unit 620 may be further configured to: determine a temperature range in which the battery temperature is located; determine a charging current value for the n^{th} charging stage for the temperature range in which the battery temperature is located as the Iₙ, according to the mapping relationship.

In an preferred embodiment of the present disclosure, Iₙ<Iₙ₋₁.

In an embodiment of the present disclosure, the charging unit 630 may be further configured to charge the battery with Iⱼ₊₁ after controlling Iⱼ to change to Iⱼ₊₁ at a predetermined rate.

The battery described in the apparatus for charging a battery provided by the embodiments of the present disclosure may include, but not limited to, a LFP power storage unit. In terms of scale, the battery described in the embodiments of the present disclosure may be a battery cell, or may be a battery module or a battery pack, which will not be limited herein.

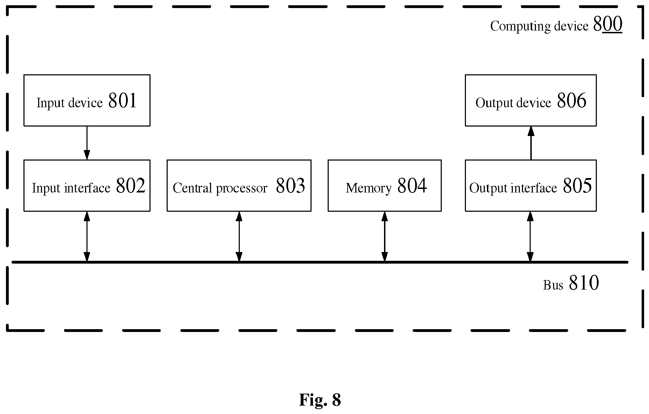

At least a portion of the method and apparatus for charging a battery described with reference to Figs. 1-7 may be implemented by a computing device. Fig. 8 illustrates a schematic structural block diagram of a computing device according to an embodiment of the present disclosure. As shown in Fig. 8, the computing device 800 may include an input device 801, an input interface 802, a central processor 803, a memory 804, an output interface 805, and an output device 806. The input interface 802, the central processor 803, the memory 804, and the output interface 805 may be connected to each other through a bus 810. The input device 801 and the output device 806 may be connected to the bus 810 via the input interface 802 and the output interface 805 respectively, and thus may be connected to other components of the computing device 800. Specifically, the input device 801 may receive the input information from the outside (e.g., a preset charging current value and/or a preset battery charging voltage for each charging phase during the charging of the battery), and transmit the input information to the central processor 803 through the input interface 802. The central processor 803 may process the input information based on computer-executable instructions stored in the memory 804 to generate output information and store the output information in the memory 804 temporarily or permanently, and then the output information may be transmitted through the output interface 805 to the output device 806. The output device 806 may output the output information to the outside of the computing device 800 for use by a user.

That is, the computing device 800 shown in Fig. 8 may be implemented as a device for charging a battery, which may include a processor 803 and a memory 804. The memory 804 may be configured to store executable program codes. The processor 803 may be configured to read executable program codes stored in the memory to perform the method for charging a battery in the foregoing embodiments, and to perform steps S110-S150 in the method for charging a battery.

Here, the processor may communicate with a battery management system and a voltage sensor mounted on a power battery to execute computer-executable instructions based on relevant information from the battery management system and/or the voltage sensor, to implement the method and apparatus for charging a battery described in conjunction with Figs. 1-7.

With the device for charging a battery in the embodiments of the present disclosure, the battery charging speed and the charging amount can be improved, the service life of the battery can be prolonged, and the allowable charging temperature range of the battery can be expanded.

In the embodiments of the present disclosure, there is also provided a computer-readable storage medium having computer instructions stored thereon which, when executed on a computer, cause the computer to perform the method for charging a battery of any one of the embodiments of the present disclosure.

The above embodiments may be implemented in whole or in part by software, hardware, firmware, or any combination thereof. When implemented in hardware, it may for example be an electronic circuit, an application specific integrated circuit (ASIC), a suitable firmware, a plug-in, a function card or the like. When implemented in software, it may be implemented in whole or in part in the form of a computer program product or a computer-readable storage medium. The computer program product or computer-readable storage medium may include one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable devices. The computer instructions may be stored in a computer-readable storage medium or transferred from one computer-readable storage medium to another, for example, transferred from a website site, a computer, a server, or a data center to another web site, computer, server, or data center in a wired (such as a coaxial cable, optical fiber, digital subscriber line (DSL)) or wireless (such as infrared, wireless, microwave, etc.) manner. The computer-readable storage medium may be any available medium that can be accessed by a computer or may include a data storage device such as a server, a data center etc. that are integrated with one or more available media. The available medium may be a magnetic medium such as a floppy disk, a hard disk, a magnetic tape, an optical medium such as a DVD, or a semiconductor medium such as a solid state disk (SSD).

It should be noted that, in the present disclosure, relational terms such as first and second are merely used to distinguish one entity or operation from another entity or operation, and do not necessarily require or imply that there is any such actual relationship or order between these entities or operations. Moreover, the terms "include", "comprise", or any other variation thereof are intended to cover a non-exclusive inclusion, such that a process, method, article, or apparatus that includes a list of elements may include not only those elements but also other elements that are not specifically listed, or may include elements that are inherent to such process, method, article, or device. Without further limitations, elements defined by the statement "include..." do not exclude the existence of additional identical elements in the process, method, article, or apparatus that includes the elements.

It should also be noted that the exemplary embodiments mentioned in the present disclosure describe some methods or systems based on a series of steps or devices. However, the present disclosure is not limited to the order of the above steps, that is, the steps may be performed in the order mentioned in the embodiments, or may be performed in a different order than that in the embodiments or several steps may be performed simultaneously.

The present disclosure may be embodied in other specific forms without departing from the essential characteristics thereof. For example, the algorithms described in the specific embodiments may be modified without departing from the disclosure. The present embodiments are therefore to be considered in all respects as illustrative and not restrictive. The scope of the present disclosure is defined by the appended claims rather than by the foregoing description, and all changes falling within the scope of the meaning and equivalents of the claims within the scope are thus intended to be included in the scope of the present disclosure.

## Claims

1. A method for charging a battery, **characterized by** comprising:
acquiring a battery temperature of the battery (S110);
determining a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges, wherein Sₙ>Sₙ₋₁, 1<n≤N, and N is the total number of charging stages (S120);
charging the battery with Iⱼ in the j^{th} charging stage, wherein 1≤j≤N (S130);
acquiring a SOC of the battery at the current time during the charging of the battery (S140);
if the SOC at the current time is less than Sⱼ, continuing to charge the battery with Iⱼ (S150);
if the SOC at the current time is not less than Sⱼ and j<N, charging the battery with Iⱼ₊₁ (S150);
if the SOC at the current time is not less than Sⱼ and j=N, stopping charging the battery (S150).

2. The method of claim 1, wherein before determining a charging current value Iₙ for the n^{th} charging stage of the battery corresponding to a charging cut-off state of charge (SOC) Sₙ for the n^{th} charging stage (S120), the method further comprises:
setting the mapping relationship between the S and the I for different temperature ranges.

3. The method of claim 2, wherein setting the mapping relationship between the S and the I for different temperature ranges comprises:
setting the S;
determining a correspondence relationship between the n^{th} interval of charging cut-off SOCs and charging current values corresponding to the n^{th} interval for the different temperature ranges, wherein a minimum SOC value for the n^{th} interval is Sₙ₋₁, a maximum SOC value for the n^{th} interval is Sₙ, and a minimum SOC value for the 1^{st} interval is 0;
establishing a mapping relationship between the Sₙ and the charging current values corresponding to the n^{th} interval for the different temperature ranges, according to the correspondence relationship.

4. The method of claim 3, wherein charging the battery with Iⱼ (S130) comprises:
acquiring a SOC before charging the battery;
determining a charging cut-off SOC interval in which the SOC before charging the battery is located;
determining a charging current value corresponding to the charging cut-off SOC interval according to the battery temperature and the correspondence relationship;
setting the determined charging current value as Iⱼ; and
charging the battery with Iⱼ.

5. The method of any of claims 1-4, wherein determining a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges (S120) comprises:
determining a temperature range in which the battery temperature is located;
determining a charging current value for the n^{th} charging stage for the temperature range in which the battery temperature is located as the Iₙ, according to the mapping relationship.

6. The method of any of claims 1-4, wherein Iₙ<Iₙ₋₁.

7. The method of any of claims 1-4, wherein charging the battery with Iⱼ₊₁ comprises:
charging the battery with Iⱼ₊₁ after controlling Iⱼ to change to Iⱼ₊₁ at a predetermined rate.

8. The method of any of claims 1-4, wherein the battery comprises a lithium iron phosphate power storage unit.

9. An apparatus for charging a battery (600), **characterized by** comprising:
a battery temperature acquiring unit (610) configured to acquire a battery temperature of the battery;
a charging current determining unit (620) configured to determine a charging current value Iₙ for the n^{th} charging stage of the battery corresponding to a charging cut-off state of charge (SOC) Sₙ for the n^{th} charging stage, according to the acquired battery temperature and a preset mapping relationship between a charging cut-off SOC S and a charging current value I for different temperature ranges, wherein Sₙ>Sₙ₋₁, 1<n≤N, and N is the total number of charging stages;
a charging unit (630) configured to charge the battery with Iⱼ in the j^{th} charging stage, wherein 1≤j≤N;
a current SOC acquiring unit (640) configured to acquire a SOC of the battery at the current time during the charging of the battery;
wherein the charging unit (630) is further configured to:
if the SOC at the current time is less than Sⱼ, continue to charge the battery with Iⱼ;
if the SOC at the current time is not less than Sⱼ and j <N, charge the battery with Iⱼ₊₁;
if the SOC at the current time is not less than Sⱼ and j=N, stop charging the battery.

10. The apparatus of claim 9, further comprising:
a mapping relationship setting unit (650) configured to set the mapping relationship between the S and the I for different temperature ranges.

11. The apparatus of claim 10, wherein the mapping relationship setting unit (650) is further configured to:
set the S;
determine a correspondence relationship between the n^{th} interval of charging cut-off SOCs and charging current values corresponding to the n^{th} interval for the different temperature ranges, wherein a minimum SOC value for the n^{th} interval is Sₙ₋₁, a maximum SOC value for the n^{th} interval is Sₙ, and a minimum SOC value for the 1^{st} interval is 0;
establish a mapping relationship between the Sₙ and the charging current values corresponding to the n^{th} interval for the different temperature ranges, according to the correspondence relationship.

12. The apparatus of claim 11, wherein the charging unit (630) is further configured to:
acquire a SOC before charging the battery;
determine a charging cut-off SOC interval in which the SOC before charging the battery is located;
determine a charging current value corresponding to the charging cut-off SOC interval according to the battery temperature and the correspondence relationship;
set the determined charging current value as Iⱼ; and
charge the battery with Iⱼ.

13. The apparatus of any of claims 9-12, wherein the charging current determining unit (620) is further configured to:
determine a temperature range in which the battery temperature is located;
determine a charging current value for the n^{th} charging stage for the temperature range in which the battery temperature is located as the Iₙ, according to the mapping relationship.

14. A device for charging a battery, **characterized by** comprising a memory (804) and a processor (803),
wherein the memory (804) is configured to store executable program codes;
the processor (803) is configured to read the executable program codes stored in the memory (804) to perform the method for charging a battery of any of claims 1-8.

15. A computer-readable storage medium having computer instructions stored thereon which, when executed on a computer, cause the computer to perform the method for charging a battery of any one of claims 1 to 8.
